(19) Europäisches Patentamt
European Patent Office
Office européen des brevets

(11) **EP 3 065 250 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(51) Int Cl.:
***H02J 3/28*** *(2006.01)*

(21) Anmeldenummer: **16158493.3**

(22) Anmeldetag: **03.03.2016**

(54) **VERFAHREN UND EINRICHTUNG ZUR BESTIMMUNG DER TOPOLOGIE EINES STROMVERSORGUNGSNETZES**

METHOD AND DEVICE FOR DETERMINING THE TOPOLOGY OF A POWER SUPPLY NETWORK

PROCEDE ET DISPOSITIF DE DETERMINATION DE LA TOPOLOGIE D'UN RESEAU D'ALIMENTATION EN ELECTRICITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2015 CH 3042015**

(43) Veröffentlichungstag der Anmeldung:
**07.09.2016 Patentblatt 2016/36**

(73) Patentinhaber: **smart grid solutions AG**
**8005 Zürich (CH)**

(72) Erfinder:
• **XU, Ouwen**
**8046 Zürich (CH)**
• **GEISSER, Benjamin**
**8610 Uster (CH)**
• **BRENZIKOFER, Alain**
**8049 Zürich (CH)**
• **TOMIC, Sasa**
**8036 Brüttisellen (CH)**
• **EISENREICH, Marc**
**2563 Ipsach (CH)**

(74) Vertreter: **Keller & Partner Patentanwälte AG**
**Eigerstrasse 2**
**Postfach**
**3000 Bern 14 (CH)**

(56) Entgegenhaltungen:
AT-A1- 511 910          DE-A1-102007 055 517
US-A1- 2011 196 546

**Beschreibung**

**Technisches Gebiet**

Die Erfindung betrifft ein Verfahren und eine Einrichtung zur Bestimmung der Topologie eines Stromversorgungsnetzes, umfassend Netzknoten und Netzverbindungen.

**Stand der Technik**

Aufgrund der Vermeidung von $CO_2$-Emissionen ist davon auszugehen, dass in den nächsten Jahren und Jahrzehnten über alle Verbrauchergruppen hinweg zunehmend Prozesse elektrifiziert werden (z. B. Wärmepumpen für die Raumheizung, Elektromobilität). Dies führt trotz Steigerung der Effizienz der elektrischen Geräte voraussichtlich zu einem Anstieg des Stromkonsums. Ausserdem wird die Produktion vermehrt dezentral erfolgen, z. B. durch kleinere Photovoltaik-Anlagen, in Zukunft möglicherweise kombiniert mit einem Batterie- oder Wärmespeicher. Dies hat grosse Auswirkungen auf die Nutzung der Stromnetze. Zum einen wird eine zumindest zeitweise höhere Belastung resultieren. Diese wird sich nicht einfach durch einen proportionalen Ausbau der heutigen Netze auffangen lassen, zumindest ein Teil der Zusatzbelastung wird durch eine effizientere Nutzung der bestehenden Netze abzufedern sein. Zum anderen werden sich aufgrund der gesteigerten Einspeisung in tieferen Netzebenen andersartige Stromflüsse und Spannungen ergeben, die zu bewältigen sind. Beides bedingt, dass die für die Netze verantwortlichen Stellen über aktuelle und möglichst vollständige Informationen zum Netzzustand in allen Netzebenen verfügen. Auf der Basis dieser Informationen lässt sich die Nutzung des Netzes bei gleichbleibender Sicherheit optimieren, z. B. können lokale Verbraucher, Erzeuger und Speicher in Abhängigkeit des lokalen Netzzustandes gesteuert werden.

Es wurde somit vorgeschlagen, das Stromversorgungsnetz mit einer Reihe von Messeinheiten auszurüsten, um den jeweiligen lokalen Netzzustand erfassen zu können. Um durch entsprechende Messeinheiten erhaltene Grössen (Ströme, Spannungen, entsprechende Phasenwinkel, Frequenzen usw.) sinnvoll interpretieren und weiter verarbeiten zu können, ist es notwendig, die Topologie des Netzes zu kennen, d. h. zu wissen, wie die Netzknoten wie z. B. Verteiler, Transformatoren, Erzeuger und Verbraucher durch Netzverbindungen miteinander verbunden sind.

Auf höheren Netzebenen ist die Topologie relativ statisch, d. h. sie ändert sich nur im Rahmen von grösseren Infrastrukturprojekten oder temporär bei Störungen. Der Netzplan lässt sich deshalb mit vertretbarem Aufwand nachführen. Gerade auf tieferen Ebenen kann sich die Topologie viel dynamischer ändern, beispielsweise durch die Zuschaltung oder Abtrennung von Erzeugern oder Verbrauchern oder kleinere Infrastrukturprojekte. Die Nachführung eines vollständigen Netzplans ist hier deutlich aufwendiger, ferner lässt sich ein gewisser zeitlicher Versatz zwischen der Änderung im Netz und der Aufdatierung des Netzplans kaum vermeiden. Wird der Interpretation der Messgrössen und der darauf basierenden Steuerung ein nicht zutreffender Netzplan zugrunde gelegt, ergeben sich jedoch Auswertungsfehler. Damit diese nicht zum Problem werden, müssen gewisse zusätzliche Sicherheitsmargen angelegt werden. Entsprechend lässt sich die Effizienz nur in beschränktem Mass steigern.

Es ist somit wünschenswert, die Topologie des Stromversorgungsnetzes unabhängig von einem Netzplan in Erfahrung bringen zu können, insbesondere auf der Basis von Messwerten, die im Netz gewonnen wurden. Entsprechende Lösungen wurden bereits vorgeschlagen.

Die AT 511 910 A1 (Siemens) beschreibt beispielsweise ein Verfahren zu Ermittlung von Kenngrössen zu Energieversorgungsnetzen und ein System zur Durchführung des Verfahrens.

Im Paper L. Zhao et al.: "Topology Identification in Smart Grid with Limited Measurements via Convex Optimization", Innovative Smart Grid Technologies - Asia (ISGT Asia), 2014 IEEE wird vorgeschlagen, eine Maximum-a-posteriori-Methode (MAP) einzusetzen, um die Topologie zu bestimmen. Die Methode beruht dabei auf vorhandenen Informationen in Bezug auf Leistungsschalter im Stromversorgungsnetz.

Im Paper Y. Sharon: "Topology Identification in Distribution Network with Limited Measurements", Innovative Smart Grid Technologies (ISGT), 2012 IEEE werden Messungen durch normalverteilte Zufallsvariablen approximiert. Aus verschiedenen möglichen Konfigurationen von Echtzeitmessungen kann dann die optimale bestimmt werden, indem die Maximum-Likelihood-Methode eingesetzt wird.

Im Paper S. Bolognani et al.: "Identification of power distribution network topology via voltage correlation analysis", Proc. IEEE Conf. on Decision and Control, 2013 wird vorgeschlagen, die Topologie eines Stromversorgungsnetzes anhand von Korrelationen zwischen Spannungsmessungen zu rekonstruieren. Dazu wird aus einer Kovarianzmatrix der Spannungsmessungen eine Konzentrationsmatrix erzeugt, die Gewichte der Kanten eines Graphen enthält, der das Netzwerk repräsentiert.

Es hat sich gezeigt, dass sich mit den verfügbaren Verfahren die Topologie realer Stromversorgungsnetze und beim Vorhandensein von Rauschen noch nicht ausreichend genau bestimmen lässt.

## Darstellung der Erfindung

Aufgabe der Erfindung ist es, ein dem eingangs genannten technischen Gebiet zugehöriges Verfahren und eine Einrichtung zur Bestimmung der Topologie eines Stromversorgungsnetzes zu schaffen, welche ein genaues und robustes Ergebnis liefern.

Die Lösung der Aufgabe ist durch die Merkmale des Anspruchs 1 definiert. Gemäss der Erfindung werden im Rahmen des Verfahrens folgende Schritte ausgeführt:

a) Für eine Mehrzahl von Netzknoten werden eine Mehrzahl von zeitsynchronen Strom-Messwerten für Netzverbindungen, die mit dem jeweiligen Netzknoten verbunden sind, gewonnen. Die Strom-Messwerte umfassen einen Phasenwinkel des Stroms.

b) Zur Gewinnung von Übereinstimmungswerten wird die Übereinstimmung von Messwerten für Netzverbindungen, die mit unterschiedlichen Netzknoten verbunden sind, evaluiert. Beim Evaluieren der Übereinstimmung wird der Phasenwinkel mit berücksichtigt.

c) Die Topologie wird anhand der Übereinstimmungswerte rekonstruiert.

Eine entsprechende erfindungsgemässe Einrichtung umfasst:

a) bei einer Mehrzahl von Netzknoten angeordnete Messeinheiten mit einem Zeitgeber, zur Gewinnung von zeitsynchronen Strom-Messwerten, die einen Phasenwinkel des Stroms umfassen, für Netzverbindungen, die mit dem jeweiligen Netzknoten verbunden sind;

b) ein Auswertesystem zum Evaluieren der Übereinstimmung von Messwerten, wobei der Phasenwinkel mit berücksichtigt wird, für Netzverbindungen, die mit unterschiedlichen Netzknoten verbunden sind zur Gewinnung von Übereinstimmungswerten und zur Rekonstruktion der Topologie anhand der Übereinstimmungswerte;

c) Einrichtungen zur Übertragung der Strom-Messwerte zur Auswerteeinheit.

Das Verfahren und die Einrichtung sind dazu geeignet, die Topologie eines Stromversorgungsnetzes bzw. eines Bereichs eines Stromversorgungsnetzes, welches mit Messeinheiten ausgerüstet ist, zu erfassen - ein Netzplan wird dazu nicht benötigt. Da die Messwerte den Betrag und den Phasenwinkel des Stroms umfassen, sind die Messwerte komplexwertig. Die Messwerte sind mindestens insofern zeitsynchron, als die zeitliche Abweichung zweier Messungen auch bei voneinander entfernten Netzknoten deutlich kleiner sein soll als die übliche Zeitskala, in welcher sich Änderungen an den im Verfahren verwendeten Strom-Messwerten ergeben. Dazu umfassen die Messeinheiten Zeitgeber, die entsprechend genaue Zeitsignale, Trigger und/oder Zeitstempel liefern können und z. B. auf dem Global Positioning System (GPS) basieren.

Unter die genannten Netzverbindungen fallen auch Anschlüsse von Verbrauchern oder Erzeugern am jeweiligen Netzknoten. Ströme zu den Verbrauchern bzw. von den Erzeugern werden so ebenfalls systematisch berücksichtigt. Generell sollen die Messeinheiten nach Möglichkeit derart ausgebildet und angeschlossen sein, dass alle Ströme, die einen mit Messeinheiten ausgestatteten Netzknoten durchlaufen, erfasst werden.

Das Auswertesystem kann als Einheit ausgebildet werden, z. B. als zentrales System, es kann aber auch modular aufgebaut sein. Im zweiten Fall können die Aufgaben des Auswertesystems verteilt von mehreren Systemkomponenten wahrgenommen werden.

Die Übertragung der Daten kann auf verschiedene Art und Weise erfolgen, z. B. über ein öffentlich verfügbares mobiles Datennetz (z. B. GSM, Internet), über ein prioprietäres Datennetz, über das Stromversorgungsnetz selbst (z. B. BPL - broadband over power lines) usw.

Es hat sich gezeigt, dass durch Auswertung der Korrelationen der Strommessungen, die auch einen Phasenwinkel des Stroms umfassen, aus dem sich zusätzliche Informationen ergeben, robuste und genaue Ergebnisse für die Topologie des untersuchten Stromversorgungsnetzes erzielt werden können. Dies gilt sowohl für Baumnetze als auch für vermaschte Netze, die sich mit herkömmlichen Verfahren nur schwer erfassen lassen.

Vorzugsweise wird zum Evaluieren der Übereinstimmung eine Matrix ausgewertet, welche Strom-Messwerte als Linearkombinationen anderer Strom-Messwerte repräsentiert. Der Zusammenhang lässt sich als $y = W x$ darstellen, wobei $y$ und $x$ Vektoren mit jeweils allen Strom-Messwerten bezeichnen, während $W$ für die Matrix steht, die in der j. Spalte der i. Zeile das Elemente $w_{i,j}$ enthält, welches den Beitrag des j. Stroms des Vektors $x$ zum i. Strom des Vektors $y$ angibt.

Eine derartige Matrix lässt sich - wie nachfolgend beschrieben - gut verarbeiten, die entsprechende Parametrisierung ermöglicht zudem eine präzise Abbildung der in einem Stromversorgungsnetz auftretenden Stromwerte. Es ist zu beachten, dass das Verfahren unabhängig von der expliziten Darstellung der Linearkombinationen ist, die entsprechenden Parameter müssen somit nicht explizit als Elemente einer Matrix dargestellt werden.

Bevorzugt wird eine Regressionsanalyse der Matrix vorgenommen, in deren Rahmen Parameter der Matrix optimiert werden. Derartige Verfahren sind gut geeignet, um die Parameter der Matrix, d. h. die Koeffizienten der Linearkombinationen, bestimmen zu können.

Mit Vorteil wird die Matrix zeilenweise bearbeitet. Dadurch kann ausgeschlossen werden, dass bei der üblichen Verarbeitung der gesamten Matrix unmittelbar die triviale Lösung, nämlich die Einheitsmatrix, reproduziert wird.

Mit Vorteil wird im Rahmen der Regressionsanalyse vor der Optimierung der Parameter die Matrix anhand von vorbekannten Informationen zu Netzknoten und Netzverbindungen vorverarbeitet. Diese vorbekannten Informationen beinhalten insbesondere die Information, welche der gemessenen Stromwerte demselben Netzknoten zugeordnet sind, denn Stromwerte desselben Netzknotens sollen bei der Bewertung der Übereinstimmung mehrerer Stromwerte in der Regel ausgeklammert werden, die entsprechenden Koeffizienten der Linearkombination sind Null. Ebenfalls soll die resultierende Matrix keine Diagonalelemente (Parameter, welche einen Stromwert mit sich selbst koppeln) enthalten.

Weitere vorbekannte Informationen, z. B. über den aktuellen Netzplan, können hier ebenfalls einfliessen.

Bei einer bevorzugten Ausführungsform des Verfahrens werden Kirchhoffsche Regeln auf die Matrix angewandt, um Netzknoten des Stromversorgungsnetzes zu berücksichtigen, zu welchen keine Strom-Messwerte vorliegen.

Falls alle Knoten vollständig durch Messeinheiten erfasst sind, sollte letztlich in jeder Zeile der Matrix ein (nicht-diagonales) Element den Wert 1 annehmen, die weiteren Elemente den Wert 0. Das entsprechende Element gibt dann an, zu welchem anderen Netzknoten die untersuchte Netzverbindung führt. Sind Netzknoten nicht erfasst, ergeben sich in einer Zeile mehrere von Null verschiedene Elemente (idealerweise +1 und -1), die letztlich abbilden, welche (untersuchten) Netzverbindungen mit dem nicht direkt erfassten Netzknoten zusammenwirken. Die Werte der Elemente widerspiegeln letztlich die Kirchhoffschen Regeln, angewandt auf den nicht direkt erfassten Netzknoten.

Die Zeilen der Matrix werden auf das Vorhandensein solcher Kirchhoffscher Regeln überprüft. Eine Regel sollte in der Matrix der Anzahl der involvierten Strommessungen entsprechend oft erscheinen. Falls ein Zusammenhang gemäss einer Kirchhoffschen Regel mit einer gewissen Konfidenz erkannt worden ist, ist es sinnvoll, die entsprechenden anderen Zeilen der Matrix mit entsprechenden Werten zu füllen.

Mit Vorteil werden Koeffizienten der Matrix durch einen Recursive-Least-Square-Algorithmus (RLS) bestimmt, insbesondere durch einen Recursive-Least-Square-Algorithmus mit einer komplexen Erweiterung (cRLS) (vgl. dazu P. S. Diniz, "Adaptive Filtering", Springer, 1997), da auch der Phasenwinkel der erfassten Stromwerte ausgewertet wird. Normalerweise ist das untersuchte System überbestimmt. Der RLS-Algorithmus liefert eine Schätzung der Koeffizienten des überbestimmten Systems. Aufgrund seiner rekursiven Struktur benötigt RLS wesentlich weniger Speicherplatz als ein Batch-LMS-Algorithmus.

Mit Vorteil wird ein Least Absolute Shrinkage and Selection Operator (LASSO) auf die Matrix angewandt (vgl. R. Tibshirani, "Regression Shrinkage and Selection via the Lasso", Journal of the Royal Statistical Society, Series B, Vol. 58, Iss. 1 (1996), 267-288). Die Optimierung wird in Abhängigkeit eines Abstimmparameters derart beeinflusst, dass nach Möglichkeit Koeffizienten generiert werden, welche exakt den Wert Null annehmen. Dies deckt sich wie oben erwähnt genau mit dem angestrebten Ziel, wonach jede Zeile genau einen von Null verschiedenen Wert annehmen soll.

Bevorzugt wird der LASSO-Operator mit verschiedenen Werten eines Abstimmparameters auf die Matrix angewandt. Mindestens eine der resultierenden Lösungen wird danach derart modifiziert, dass die Koeffizienten jeweils 0 oder 1 annehmen, anschliessend dient die mindestens eine modifizierte Lösung als Startpunkt für den Recursive-Least-Square-Algorithmus.

In einer ersten Variante wird diejenige Lösung verwendet, welche die am wenigsten von Null verschiedenen Einträge umfasst. Die Bestimmung des Abstimmparameters ist schwierig. Es hat sich gezeigt, dass durch diese Massnahme ein sinnvoller Wert des Abstimmparameters herangezogen wird und dass sich dadurch ein gut geeigneter Startpunkt für das RLS-Verfahren ergibt, von welchem die Werte der Matrix zuverlässig zum korrekten Ergebnis konvergieren.

In einer zweiten, bevorzugten Variante dienen mehrere modifizierte Lösungen als Startpunkte für den Recursive-Least-Square-Algorithmus und dasjenige Ergebnis des Recursive-Least-Square-Algorithmus wird ausgewählt, welches nicht-trivial ist und den geringsten Vorhersagefehler aufweist. Tests haben gezeigt, dass diese Variante die zuverlässigsten Ergebnisse liefert und auch bei relativ starkem Rauschen noch gut funktioniert.

Mit Vorteil werden nach der Optimierung der Parameter der Matrix die erhaltenen Parameter analysiert und die Matrix wird anhand von Ergebnissen der Analyse in einen ausgewerteten Bereich und einen noch weiter zu verarbeitenden Bereich aufgeteilt. Für den noch weiter zu verarbeitenden Bereich wird dann eine erneute Optimierung der Parameter vorgenommen. Mehrere solcher Iterationen können aufeinanderfolgend ausgeführt werden. Ein Abbruchkriterium kann die Tatsache darstellen, dass nach einer Analyse keine weiteren Bereiche der Matrix dem ausgewerteten Bereich zugeordnet werden können. Die verbleibenden, noch zu bearbeitenden Bereiche entsprechen Subgraphen, welche durch andere Verfahren ausgewertet oder als virtuelle Ladungen der bestimmten Topologie hinzugefügt werden können.

Die genannten Bereiche der Matrix sind in der Regel nicht zusammenhängend, d. h. sowohl der verarbeitete Bereich als auch der noch weiter zu verarbeitende Bereich sind aus nicht zusammenhängenden Kombinationen von Zeilen und Spalten der Matrix zusammengesetzt.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1A        eine schematische Darstellung eines Ausschnitts aus einem Stromversorgungsnetz;

Fig. 1B        eine schematische Darstellung der messtechnischen Abbildung des Netzabschnitts aus der Figur 1A;

Fig. 2        eine schematische Darstellung von vier miteinander verbundenen Netzknoten;

Fig. 3        ein Flussdiagramm zum generellen Ablauf eines erfindungsgemässen Verfahrens;

Fig. 4        eine schematische Darstellung dreier linear verbundener Knoten;

Fig. 5        eine schematische Darstellung eines nicht messtechnisch erfassten Knotens mit vier Nachbarknoten;

Fig. 6        eine schematische Darstellung eines Knotens mit zusätzlicher Last;

Fig. 7        ein Flussdiagramm des erfindungsgemässen Verfahrens;

Fig. 8        ein Flussdiagramm der Koeffizientenbestimmung;

Fig. 9A-F        Flussdiagramme zur Koeffizientenanalyse und -verarbeitung; und

Fig. 10A, B        Flussdiagramme zur Behandlung von Netzknoten mit zusätzlichen Lasten oder Stromquellen.

Grundsätzlich sind in den Figuren gleiche Teile mit gleichen Bezugszeichen versehen.

## Wege zur Ausführung der Erfindung

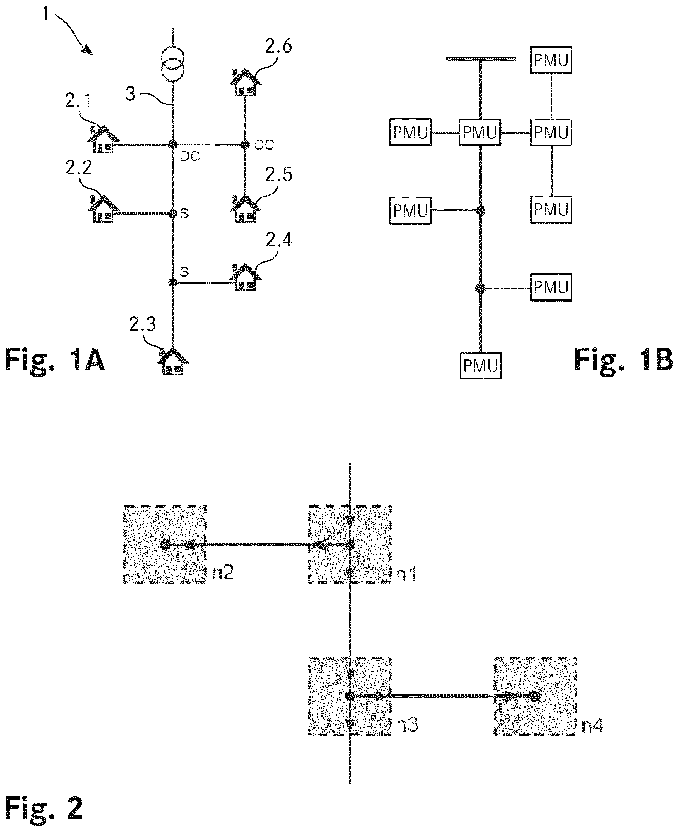

Das erfindungsgemässe Verfahren dient zur Ermittlung der Topologie eines Stromversorgungsnetzes. Ein kleiner Ausschnitt aus einem solchen Netz ist in der Figur 1A dargestellt. Das Netz 1 umfasst Hausanschlüsse 2.1...2.6, welche über Verteilerkästen DC oder unterirdische Anschlüsse S mit der Zuleitung 3 gekoppelt sind. In der Figur 1B ist die messtechnische Abbildung des in der Figur 1A gezeigten Netzausschnitts dargestellt: In den Verteilerkästen DC und bei den Hausanschlüssen 2.1...2.6 ist je eine Messeinheit PMU angeordnet, welche u. a. komplexe Stromwerte aller am jeweiligen Ort eintreffender Leitungen misst und an eine Zentrale übermittelt. Die unterirdischen Anschlüsse S sind nicht ohne weiteres erreichbar und deshalb nicht mit Messeinheiten PMU ausgerüstet.

Ausgangspunkt des beschriebenen Verfahrens zur Bestimmung der Topologie eines Stromversorgungsnetzes sind die Messdaten und die Kenntnis, von welcher Messeinheit sie stammen. Der Ort der Messeinheit innerhalb des Netzes ist aber a priori nicht bekannt. Bei den Messdaten handelt es sich um komplexe Stromwerte, d. h. um zeitliche Verläufe des Betrags und des Phasenwinkels in Bezug auf die von den an den Netzknoten angeordneten Messeinheiten überwachten Verbindungsleitungen. Wie anhand der in der Figur 2 gezeigten vier Netzknoten n1...n4 dargestellt, sollen nun zur Ermittlung der Topologie der eingehende und der ausgehende Knoten in Bezug auf eine Verbindungsleitung bestimmt werden. Beispielsweise deutet die Tatsache, wonach $i_{3,1} = i_{5,3}$ ist, darauf hin, dass der Knoten n 1 mit dem Knoten n3 verbunden ist.

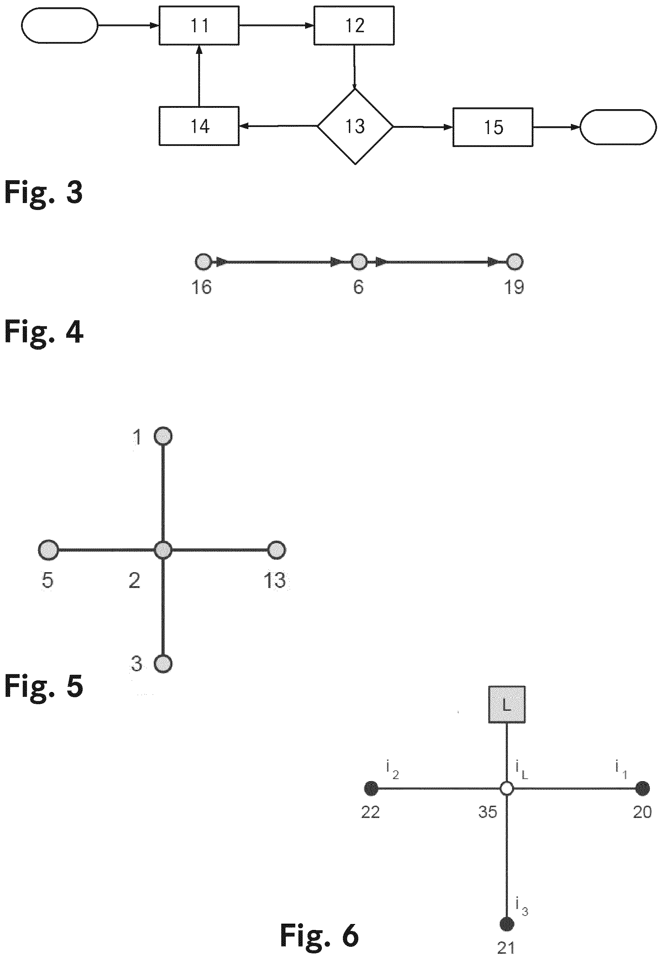

Der generelle Ablauf des Verfahrens ist in der Figur 3 schematisch dargestellt.

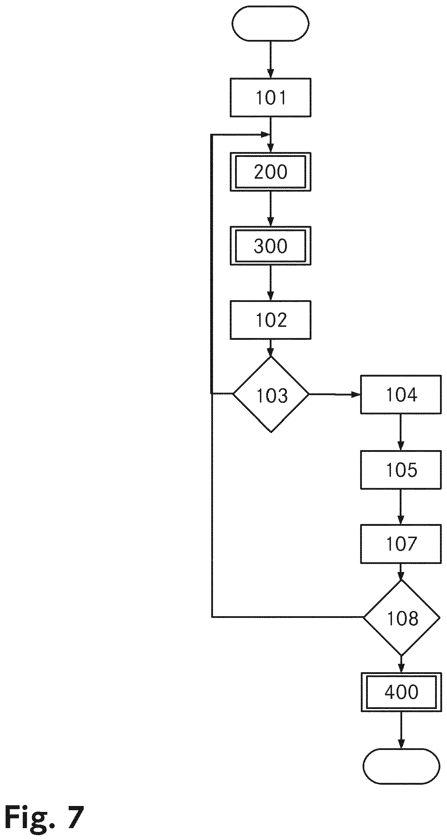

Zunächst wird das System identifiziert, d. h. die zu verarbeitenden Messwerte werden zusammengestellt und die Übereinstimmungen (Korrelationen) zwischen den einzelnen Stromwerten werden bestimmt (Schritt 11). Anschliessend wird das System anhand dieser Übereinstimmungen analysiert (Schritt 12). Falls sich das System reduzieren lässt (Entscheidung 13), so wird diese Reduktion vorgenommen (Schritt 14) und das System auf der Basis des reduzierten Parametersatzes erneut identifiziert (Schritt 11). Lässt sich das System nicht weiter reduzieren (Entscheidung 13), werden die verbliebenen Komponenten miteinander verbunden (Schritt 15). Das Ergebnis ist die Topologie des analysierten Netzes. Die einzelnen Schritte sind im Folgenden näher beschrieben. Der effektive Verfahrensablauf ist durch detailliertere Flussdiagramme in den Figuren 7-10 illustriert.

Um die Beziehungen zwischen den gemessenen Stromwerten zu identifizieren, werden entsprechende Übereinstimmungen bzw. Kopplungen mit Werkzeugen der Regressionsanalyse approximiert. Die Situation wird durch die Gleichung

$$y = W\,x$$

beschrieben, wobei die Vektoren x und y sämtliche berücksichtigten Strom-Messwerte umfassen und die Matrix W die Koeffizienten von Linearkombinationen angibt, wobei in der j. Spalte der i. Zeile die Matrix das Element $w_{i,j}$ enthält, welches den Beitrag des j. Stroms des Vektors x zum i. Strom des Vektors y angibt:

$$\begin{bmatrix} i_{1,1} \\ i_{2,1} \\ i_{3,1} \\ i_{4,2} \\ \vdots \\ i_{m,n} \end{bmatrix} = \begin{bmatrix} w_{1,1} & w_{1,2} & w_{1,3} & w_{1,4} & \cdots & w_{1,m} \\ w_{2,1} & w_{2,2} & w_{2,3} & w_{2,4} & \cdots & w_{2,m} \\ w_{3,1} & w_{3,2} & w_{3,3} & w_{3,4} & \cdots & w_{3,m} \\ w_{4,1} & w_{4,2} & w_{4,3} & w_{4,4} & \cdots & w_{4,m} \\ \vdots & \vdots & \vdots & \vdots & \ddots & \vdots \\ w_{m,1} & w_{m,2} & w_{m,3} & w_{m,4} & \cdots & w_{m,m} \end{bmatrix} \cdot \begin{bmatrix} i_{1,1} \\ i_{2,1} \\ i_{3,1} \\ i_{4,2} \\ \vdots \\ i_{m,n} \end{bmatrix},$$

wobei $i_{m,n}$ angibt, dass es sich um den m. Stromwert des gesamten Sets handelt und dass dieser Wert von der n. Messeinheit stammt.

Da der Eingangs- und der Ausgangsvektor x, y identisch sind, stellt die Identitätsmatrix I eine triviale Lösung dar. Um diese Lösung zu vermeiden, wird die Matrix W nicht als Ganzes verarbeitet, sondern ein zeilenweises Update vorgenommen. In jeder Zeile wird zunächst einmal das Diagonalelement entfernt. Weil bekannt ist, welche Messwerte von welchem Netzknoten stammen, kann der Trainingsvektor für jede Zeile weiter reduziert werden, denn alle Ströme desselben Netzknoten können ebenfalls ausser Acht gelassen werden. Die resultierende Parametermatrix W hat anschliessend folgende Form:

$$\begin{bmatrix} i_{1,1} \\ i_{2,1} \\ i_{3,1} \\ i_{4,2} \\ \vdots \\ i_{m,n} \end{bmatrix} = \begin{bmatrix} 0 & 0 & 0 & w_{1,4} & \cdots & w_{1,m} \\ 0 & 0 & 0 & w_{2,4} & \cdots & w_{2,m} \\ 0 & 0 & 0 & w_{3,4} & \cdots & w_{3,m} \\ w_{4,1} & w_{4,2} & w_{4,3} & 0 & \cdots & w_{4,m} \\ \vdots & \vdots & \vdots & \vdots & \ddots & \vdots \\ w_{m,1} & w_{m,2} & w_{m,3} & w_{1,3} & \cdots & 0 \end{bmatrix} \cdot \begin{bmatrix} i_{1,1} \\ i_{2,1} \\ i_{3,1} \\ i_{4,2} \\ \vdots \\ i_{m,n} \end{bmatrix}.$$

Die zwei Verfahren, die zur Parameterbestimmung angewendet werden sind das Recursive-Least-Squares-Verfahren (RLS) und der Least Absolute Shrinkage and Selection Operator (LASSO).

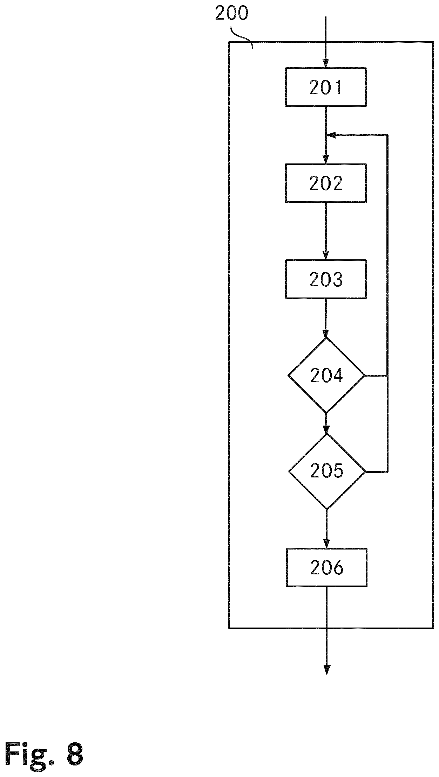

Die Figur 7 gibt einen Überblick über das gesamte Verfahren. Funktionsblöcke, die in weiteren Flussdiagrammen (Fig. 8-10) dargestellt sind, sind jeweils durch doppelt umrahmte Rechtecke symbolisiert.

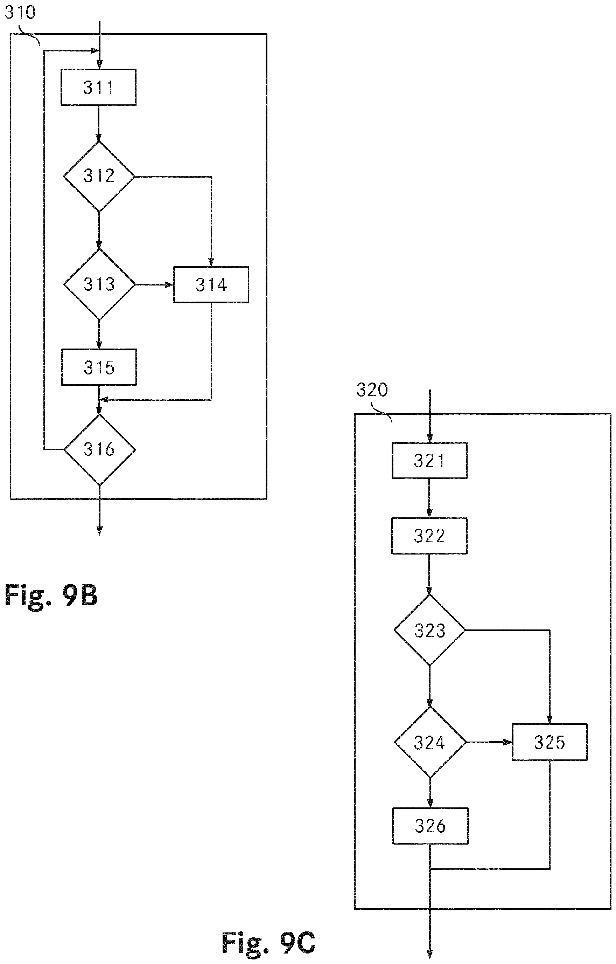

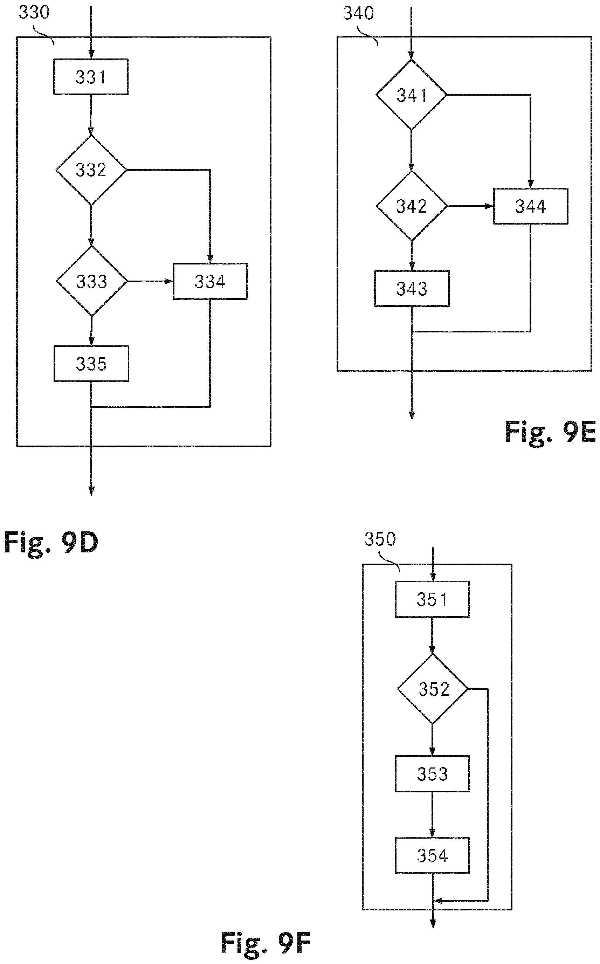

Es kann sein, dass das untersuchte Netz Knoten umfasst, welche nur einen eingehenden und einen ausgehenden Strom aufweisen. Es ergibt sich dann die in der Figur 4 gezeigte Situation: alle dort gezeigten Ströme sind identisch. Um nun Redundanzen zu vermeiden, werden zunächst die Ströme von Knoten wie dem Knoten 6 zu einem einzelnen Strom zusammengefasst, bevor die Parameteranpassung durchgeführt wird (Schritt 101). Trotzdem ergibt sich nach der Anpassung eine Beziehung von $i_{16} = 0.5_{i6} + 0.5\,i_{19}$. Solche mehrfachen im Wesentlichen gleich grossen Parameter müssen gesondert behandelt werden, dies ist unten, im Zusammenhang mit der Figur 9C, beschrieben.

Eine derartige Sonderbehandlung lässt sich vermeiden, indem bereits beim Einrichten der Messeinheiten darauf geachtet wird, dass derartige Knoten mit nur zwei Verbindungen nicht mit Messeinheiten ausgerüstet werden.

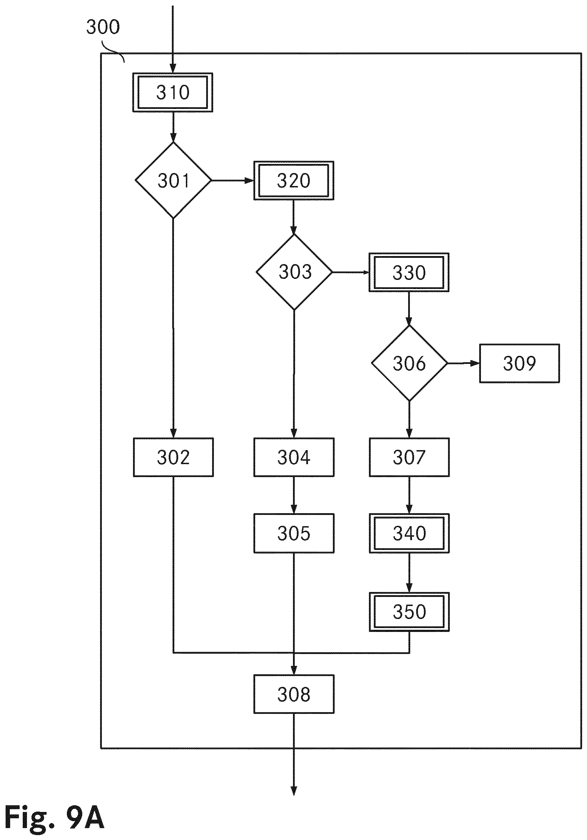

Nach dieser Anpassung werden zunächst die Koeffizienten der Matrix W bestimmt (Schritt 200). Der entsprechende Ablauf ergibt sich aus dem Flussdiagramm in Figur 8. Er ist weiter unten im Detail beschrieben. Anschliessend werden die ermittelten Koeffizienten analysiert und verarbeitet (Schritt 300). Der entsprechende Ablauf ergibt sich aus den Flussdiagrammen gemäss den Figuren 9A-9F und der untenstehenden Beschreibung.

Ströme bzw. Koeffizienten, die Netzknoten zugeordnet sind, die nach der Verarbeitung durch die entsprechenden Koeffizienten in der Matrix bereits gut beschrieben sind, können dann aus den Vektoren bzw. der Matrix entfernt werden (Schritt 102). Falls sich dadurch eine Reduktion der Grösse der Matrix ergeben hat (Entscheidung 103), wird anschliessend erneut eine Bestimmung der Koeffizienten (Schritt 200) durchgeführt.

Falls keine weitere Reduktion mehr möglich war (Entscheidung 103), werden die zunächst im Schritt 101 entfernten Knoten mit nur zwei Strömen dem Verzeichnis der Knoten und Ströme wieder hinzugefügt (Schritt 104). Es wird dann eine Bestimmung der Koeffizienten (analog zum Schritt 200) anhand des noch divergenten Sets von Knotenströmen durchgeführt (Schritt 105). Anschliessend werden analog zur Analyse und Verarbeitung der aus der Matrix W bereits vorher bestimmten Komponenten (vgl. Schritt 300) Kirchhoffsche Regeln gesucht und verarbeitet (Schritt 107), wie weiter unten näher beschrieben.

Falls sich dadurch eine Reduktion der Grösse der Matrix ergeben hat (Entscheidung 108) wird eine erneute Bestimmung der Koeffizienten der Matrix W (Schritt 200) vorgenommen und das Verfahren dort fortgesetzt. Ansonsten wird das Verfahren mit der Endverarbeitung gemäss Funktionsblock 400 fortgesetzt (siehe unten).

Idealerweise enthalten die Zeilen der Parametermatrix W am Schluss nur noch genau einen Wert, der von 0 verschieden ist und 1 beträgt. Dies entspricht einer eindeutigen Beziehung zweier (unterschiedlicher) gemessener Stromwerte und zeigt an, dass zwei Knoten durch genau eine Leitung (direkt) miteinander verbunden sind. Weil beim Auftreten von Rauschen die Werte nicht genau 0 bzw. 1 betragen werden, wird ein Schwellenwert vorgegeben. Werte, die diesen Schwellenwert nicht übersteigen, werden 0 gesetzt, die anderen Werte 1. Bezogen auf das Beispiel in der Figur 2 ergibt sich folgendes Resultat:

$$i_{3,1} = \begin{bmatrix} 0 & \ldots & 0 & 1 & 0 & \ldots & 0 \end{bmatrix} \cdot \begin{bmatrix} i_{1,1} & \ldots & i_{4,2} & i_{5,3} & i_{6,3} & \ldots & i_{8,4} \end{bmatrix}^T.$$

Es ist möglich, dass gewisse Netzknoten mit Lasten (oder Stromquellen) verbunden sind, die sonst nirgends erfasst werden. Solche Knoten müssen besonders behandelt werden (siehe unten). Es ist ebenfalls möglich, solche Knoten bereits bei der Zuordnung von Messeinheiten vorzumerken und aus der Analyse auszuschliessen.

Nach der Bestimmung der Parameter werden somit für jede Zeile der Matrix W die in der Figur 9B schematisch dargestellten Schritte des Funktionsblocks 310 durchgeführt. Zunächst werden die Koeffizienten mit Wert 1 in der untersuchten Zeile identifiziert (Schritt 311). Es wird anschliessend geprüft, ob es einen einzigen solchen Wert in der Zeile gibt (Entscheidung 312). Falls ja, wird geprüft, ob alle anderen Elemente einen Wert unter einem vorgegebenen Grenzwert annehmen (Entscheidung 313). Ist dies auch der Fall, wird für die untersuchte Zeile die entsprechende Position zurückgegeben (Schritt 315). Falls es mehrere Elemente mit Wert 1 gibt oder falls daneben Werte vorhanden sind, die den Schwellenwert überschreiten, wird die Zeile zum divergierenden und weiter zu verarbeitenden Set hinzugefügt (Schritt 314). Solange nicht alle Zeilen bearbeitet worden sind (Entscheidung 316), wird mit der Analyse der nächsten Zeile fortgefahren.

Nach Durchlaufen des Funktionsblocks 310 wird geprüft, ob sich entsprechende Zeilen ergeben haben (Entscheidung 301). Ist dies der Fall, werden die betroffenen Koeffizienten der Matrix identifiziert (Schritt 302) und entsprechend überschrieben (Schritt 308). Es folgt - wie oben erwähnt - eine neue Bestimmung der Koeffizienten.

Falls keine Zeile mit einer eindeutigen 1 identifiziert werden konnte (Entscheidung 301), werden die Zeilen auf mehrere Parameter mit ungefähr gleichem Wert hin untersucht (Funktionsblock 320, vgl. Figur 9C). Wie oben erwähnt, ergeben sich trotz der Zusammenfassung von Knoten, die nur zwei Verbindungen aufweisen, im Rahmen der Bestimmung der Koeffizienten Zeilen, welche mehrere Elemente mit im Wesentlichen demselben Wert aufweisen. In Abhängigkeit der Anzahl der zusammengefassten Netzknoten n wird zunächst der erwartete Wert f = 1/n berechnet (Schritt 321). Anschliessend werden die Zeilen auf diesen Wert hin untersucht (Schritt 322). Werden solche Werte gefunden, wird überprüft, ob die weiteren Elemente der entsprechenden Zeile nahe bei Null sind (Entscheidung 323). Ist dies der Fall, erfolgt die Prüfung, ob das Element tatsächlich n mal auftritt (Entscheidung 324). Ist dies ebenfalls der Fall, werden die Positionen der Koeffizienten mit diesem Wert zurückgegeben. Das enspricht gleichen Strömen auf einem Netzpfad ohne Abzweigungen. Diese Knotenpunkte werden dann nach der Spannung sortiert (Schritt 326). Falls nebst den ermittelten Werten Koeffizienten vorhanden sind, die erheblich von Null verschieden sind oder falls die Anzahl der ermittelten Koeffizienten nicht mit n übereinstimmt, so wird die Zeile zum divergierenden und weiter zu verarbeitenden Set hinzugefügt (Schritt 325).

Nach Durchlaufen des Funktionsblocks 320 wird geprüft, ob sich entsprechende Zeilen ergeben haben (Entscheidung 303). Ist dies der Fall, werden die betroffenen Koeffizienten der Matrix identifiziert (Schritt 304), nach Spannung sortiert (Schritt 305) und entsprechend überschrieben (Schritt 308). Es folgt - wie oben erwähnt - eine neue Bestimmung der Koeffizienten.

Falls keine Zeile mit mehreren Parametern mit gleichem Wert identifiziert werden konnte (Entscheidung 303), werden die Zeilen auf Kirchhoffsche Regeln hin untersucht (Funktionsblock 330, vgl. Figur 9D).

Falls Netzknoten nicht überwacht sind, z. B. weil sie nicht mit einer Messeinheit ausgerüstet sind oder wenn diese ausfällt, werden gewisse Zeilen der Matrix nach der Bestimmung der Koeffizienten kein eindeutiges Bild liefern, d. h. diese Zeilen werden keine einzelne 1 enthalten. Für Netzverbindungen, die sich an einem Netzknoten treffen, gelten jedoch die Kirchhoffschen Regeln. Diese sollten sich im Rahmen der Koeffizientenbestimmung ergeben. Die Figur 5 zeigt ein Beispiel eines Ausschnitts aus einem Netz, bei welchem ein Netzknoten 2 nicht von Messungen erfasst wird. Mit der Annahme, dass die Ströme von oben nach unten fliessen ergibt sich folgende Kirchhoffsche Regel:

$$i_1 = i_5 + i_3 + i_{13}.$$

Generell werden beim Vorhandensein von Kirchhoffschen Regeln Werte von +1 bzw. -1 in den Zeilen der Matrix erwartet. Umfasst eine Zeile somit mehrere Werte mit Betrag 1, so wird angenommen, dass sie eine Kirchhoffsche Regel abbildet. Zusätzlich sollte eine solche Regel mehrfach erscheinen, nämlich der Anzahl der von der Regel erfassten Ströme entsprechend. Im obigen Fall wären folgende Regeln auf den entsprechenden anderen Zeilen der Matrix zu erwarten:

$$i_5 = i_1 - i_3 - i_{13};$$

$$i_3 = i_1 - i_5 - i_{13};$$

$$i_{13} = i_1 - i_5 - i_3.$$

Zunächst werden zeilenweise Elemente gesucht, deren Betrag den Wert 1 annimmt (Schritt 331). Falls alle anderen Elemente ungefähr den Wert 0 haben (Entscheidung 332) und falls die Elemente mit Betrag 1 eine Kirchhoffsche Regel erfüllen (Entscheidung 333), so wird diese Regel erfasst (Schritt 335), ansonsten wird die Zeile wieder dem divergierenden und weiter zu verarbeitenden Set hinzugefügt (Schritt 334). Nach der Analyse der gesamten Matrix werden - falls Regeln ermittelt werden konnten (Entscheidung 306) die von den ermittelten Regeln betroffenen Koeffizienten der Matrix identifiziert (Schritt 307).

Wie bereits erwähnt, ergeben sich Kirchhoffsche Regeln auch bei Lasten (oder Stromquellen), die mit Netzknoten verbunden sind, welche nicht messtechnisch erfasst werden. Wenn beispielsweise in der Situation in der Figur 2 der Strom $i_{1,1}$ von einer solchen Last herrührt, ergibt sich die Kirchhoffsche Regel $i_{1,1} = i_{4,2} + i_{5,3}$. Offensichtlich rührt dies daher, dass $i_{2,1} = i_{4,2}$ und $i_{3,1} = i_{5,3}$. Somit ist vor dem Setzen von Parametern gemäss Kirchhoffschen Regeln zu prüfen, ob die Zusammenhänge, welche durch die Regel abgebildet werden, schon durch andere Parameterzeilen gegeben sind (Funktionsblock 340). Werden solche Zeilen gefunden (Entscheidung 341), wird die untersuchte Zeile wieder zum divergierenden und weiter zu verarbeitenden Set hinzugefügt (Schritt 344). Dasselbe gilt auch, wenn versteckte Kirchhoffsche Regeln involviert sind (Entscheidung 342). Ansonsten wird ein virtueller Knoten erzeugt (Schritt 340)

In komplizierten Fällen, z. B. bei vermaschten Netzen, ist die Konsistenz nicht garantiert. Aus diesem Grund wird im Rahmen des beschriebenen Verfahrens angenommen, dass die weiteren Regeln ebenfalls gelten, wenn eine Regel klar etabliert worden ist. Entsprechend werden Parameter der entsprechenden Zeilen der Matrix gemäss den weiteren Regeln gesetzt (Funktionsblock 350). Dazu werden zunächst alle identifizierten Regeln gesammelt (Schritt 351). Dann wird geprüft, ob alle äquivalenten Regeln in dieser Sammlung bereits enthalten sind (Entscheidung 352). Ist dies nicht der Fall, werden die fehlenden Regeln generiert (Schritt 353). Die von den Regeln abgedeckten Zeilen der Matrix können dann aus dem divergierenden und weiter zu verarbeitenden Set entfernt werden (Schritt 354).

Werden auch keine Kirchhoffschen Regeln ermittelt (Entscheidung 306), so werden die vorhandenen Zeilen der Matrix zum divergierenden und weiter zu verarbeitenden Set hinzugefügt (Schritt 309).

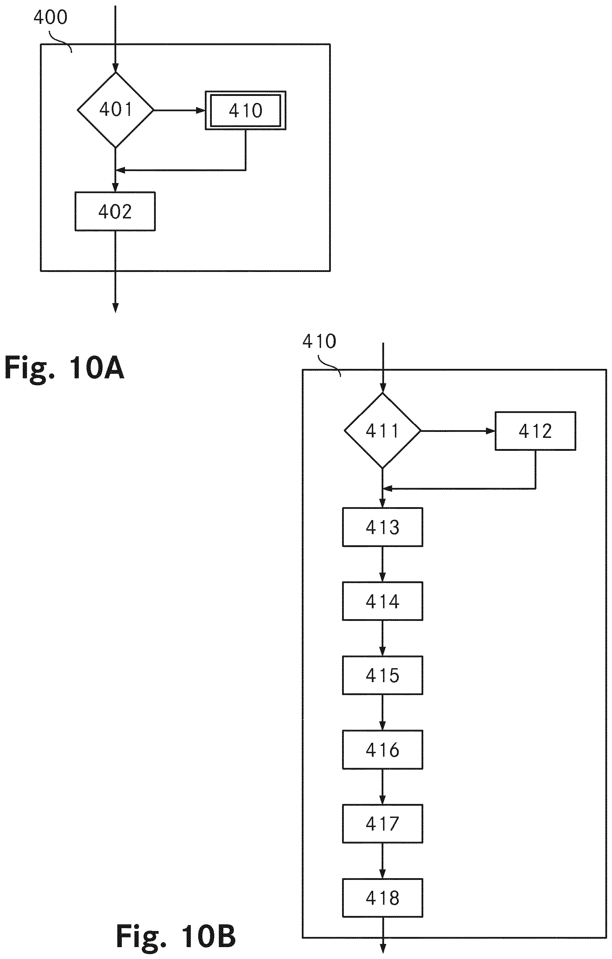

Wie bereits erwähnt, erfordern Netzknoten mit zusätzlichen Lasten oder Stromquellen eine besondere Behandlung. Diese wird durch den Funktionsblock 400 (vgl. Figuren 10A, 10B) wahrgenommen. Weil der Laststrom an diesen Netzknoten nur einmal gemessen wird, stimmen die Kirchhoffschen Regeln in Bezug auf diese Netzknoten nicht mehr, wenn sie sich nicht in den berücksichtigten Messungen finden. Die Figur 6 illustriert einen solchen Fall: Wenn der Netzknoten 35 nicht mehr erfasst wird, ergibt sich die Kirchhoffsche Regel $i_1 = i_2 + i_3 + i_L$. Der Laststrom $i_L$ tritt nun aber ausschliesslich am (nicht gemessenen) Netzknoten 35 auf. Er wird somit nicht durch die betrachtete Matrix abgebildet.

Somit können auf die Matrix angewandte Regressionsverfahren keine sinnvollen Parameter für diese Kirchhoffsche Regel liefern. Es ergeben sich Zeilen, die als divergent eingestuft werden müssen.

Somit verbleiben nach der Koeffizientenbestimmung u. U. einige Zeilen, die nicht klar einer Topologie zugeordnet werden können (Entscheidung 401), entsprechend bleiben Subgraphen übrig. Diese Subgraphen lassen sich mit der Funktion components() der allgemein verfügbaren Bibliothek MatlabBGL für Matlab bestimmen (Funktionsblock 410).

Um die korrekte Verbindung abzuschätzen, kann beispielsweise die Matlab-Funktion corr() eingesetzt werden: Weil derartige Fälle lokal begrenzt sind, beschränkt sich die Zielsetzung auf das Verbinden der verbleibenden Subgraphen. Dazu wird zunächst geprüft, ob jeder Subgraph divergierende Zeilen aufweist (Entscheidung 411). Bei Subgraphen ohne divergierende Zeilen werden alle Ströme dieses Subgraphen zu den divergierenden Strömen hinzugefügt (Schritt 412). Anschliessend wird aus den divergierenden Zeilen die Korrelationsmatrix gebildet (Schritt 413). Korrelationswerte, die eine bestimmte untere Schwelle überschreiten, werden ausgewählt (Schritt 414). Diese untere Schwelle soll grösser sein als die durchschnittliche Korrelation zwischen den Stromprofilen. Pro Subgraph wird dann ein Netzknoten ausgewählt (Schritt 415) und es wird durch Spiegeln bei Null eine Gewichtungsfunktion erzeugt (Schritt 416). Dann wird die Funktion graphminspantree() verwendet, um die verbleibenden Subgraphen als minimalen Baum zu verbinden (Schritt 417). Schliesslich werden die Verbindungen in der Parametermatrix eingetragen.

Zwei oder mehr Subgraphen können mit demselben Knoten eines weiteren Subgraphen verbunden werden. Dies wird über die Kirchhoffschen Regeln berücksichtigt. Den am Schluss divergenten Knotenströmen werden virtuelle Lasten angeschlossen, um den Baum zu komplettieren (Schritt 402).

In der Regel wird das System überbestimmt sein, weil deutlich mehr Strommessungen berücksichtigt werden als Parameter zu bestimmen sind. Um aus diesem überbestimmten System die Koeffizienten der Matrix zu bestimmen, wird der Recursive-Least-Square-Algorithmus (RLS) herangezogen (Funktionsblock 200). Aufgrund seiner rekursiven Struktur benötigt RLS wesentlich weniger Speicherplatz als ein Batch-LMS-Algorithmus. Der RLS ist aus dem LMS abgeleitet, indem die Systemgleichung in einer adaptiven Weise transformiert wird. Ein Invertieren der Autokorrelationsmatrix kann vermieden werden, indem die Inversion durch die Woodbury-Matrix-Identität ersetzt wird, vgl. z. B. P. S. Diniz, "Adaptive Filtering", Springer, 1997.

Je nachdem, ob reelle Stromwerte oder komplexe Stromwerte gemessen oder berücksichtigt werden, wird ein reellwertiges RLS-Verfahren oder ein komplexwertiges RLS-Verfahren (cRLS) eingesetzt.

Das reellwertige RLS-Verfahren lässt sich wie folgt implementieren, wobei aus dem Vektor X mit den gemessenen Stromwerten die Matrix W mit den Koeffizienten berechnet wird:

```
begin
    /* Initialization                                              */
    R_xx^{-1}(0) = (1/δ) I            /* δ is a small constant */
    W(0) = 0 ,       /* W(n) can be initialized arbitrarily if necessary */
    /* Recursion                                                   */
    for n > 0 do
        k(n) = (R_xx^{-1}(n-1) X(n)) / (λ + X^T(n) R_xx^{-1}(n-1) X(n))
        R_xx^{-1}(n) = (1/λ) R_xx^{-1}(n-1) - k(n) X^T(n) R_xx^{-1}(n-1)
        ε(n) = d(n) - W^T(n-1) X(n)
        W(n) = W(n-1) + k(n)ε(n)
        e(n) = d(n) - W^T(n) X(n)
    end
end
```

Wie oben erwähnt, wird die Parametermatrix W zeilenweise aktualisiert, damit die Einheitsmatrix als triviale Lösung vermieden wird.

Die komplexe Variante lässt sich wie folgt implementieren, wobei primär die Transpositionen durch Hermitesche Konjugationen zu ersetzen sind, die Matrixeinträge und der a-priori-Fehler sind zusätzlich komplex-konjugiert:

```
1  begin
       /* Initialization                                                    */
2      R_xx(0) = (1/δ)I                        /* where δ is a small constant */
3      X(0) = W(0) = [0 0 ... 0]^T
       /* Recursion                                                         */
4      for k > 0 do
5          e(k) = d(k) - W^H(k-1)X(k)
6          Ψ(k) = R_xx(k-1)X(k)
7          R_xx(k) = (1/λ)[R_xx(k-1) - (Ψ(k)Ψ^H(k))/(λ+Ψ^H(k)X(k))]
8          W(k) = W(k-1) + e*(k)R_xx(k)X(k)
9      end
10 end
```

Wie bereits erwähnt, wird eine möglichst einfache Lösung angestrebt, bei welcher sich jeweils genau zwei an verschiedenen Netzknoten gemessene Ströme entsprechen. Aufgrund der Kirchhoffschen Regeln kann im Prinzip jeder Strom durch seine Abkömmlinge am nächsten Netzknoten ausgedrückt werden. Somit gibt es theoretisch eine riesige Zahl möglicher Lösungen, die einer unterschiedlich stark besetzten Parametermatrix entsprechen. Es handelt sich um ein so genanntes multikollineares System.

Um nun die gewünschte Lösung aufzufinden, d. h. eine Parametermatrix, die möglichst dünn besetzt ist, wird der Least Absolute Shrinkage and Selection Operator (Lasso) eingesetzt, der in R. Tibshirani, "Regression Shrinkage and Selection via the Lasso", Journal of the Royal Statistical Society, Series B, Vol. 58, Iss. 1 (1996), 267-288 erstmals vorgeschlagen wurde. Es handelt sich dabei eigentlich um ein regularisiertes Verfahren der kleinsten Quadrate, bei welchem die residuale Summe der Quadrate minimiert wird unter der Bestimmung, dass die $\ell 1$-Norm der Koeffizienten kleiner ist als eine Konstante t. Die Definition ist wie folgt:

$$(\hat{\alpha}, \hat{\beta}) = argmin\left\{ \sum_{i=1}^{N}(y_i - \alpha - \sum_{j}\beta_j x_{ij})^2 \right\},$$

wobei

$$\sum_{j}|\beta_j| \leq t .$$

Durch Einsatz des LASSO wird eine möglichst dünn besetzte Matrix erzielt. Die Anzahl der Elemente mit Wert 1, welche die Übereinstimmung zweier gemessener Ströme anzeigen, wird minimiert.

Der Algorithmus ist beispielsweise in der Statistik-Toolbox von Matlab verfügbar. Die entsprechende Formulierung der Funktion lasso() unterscheidet sich etwas von der obigen. Der Abstimmparameter t ist in anderer Form in der Gleichung als Abstimmparameter λ enthalten:

$$min_{\beta_0,\beta}\left( \frac{1}{2N}\sum_{i_1}^{N}(y_i - \beta_0 - x_i^T\beta)^2 + \lambda\sum_{j=1}^{p}|\beta_j| \right).$$

Die Kostenfunktion lässt sich durch numerische Verfahren wie z. B. ein koordiniertes Abstiegsverfahren (coordinate descent) optimieren.

Es hat sich gezeigt, dass es nicht trivial ist, den richtigen Abstimmparameter λ zu finden. Ein fester Wert ist nicht für alle Zeilen der Parametermatrix geeignet, da diese unterschiedliche Situationen (insbesondere einen 1:1-Zusammenhang zwischen zwei Strömen oder aber eine Kirchhoffsche Regel) abbilden können. Wenn der Abstimmparameter λ, welcher das relative Gewicht der $\ell 1$-Norm angibt, zu klein gewählt wird, ergibt sich bei einer Zeile, die einer Kirchhoffschen Regel entspricht, nicht das korrekte Ergebnis. Wird λ zu gross gewählt, ergeben sich Koeffizienten, die sehr nahe bei Null liegen, es ist dann schwierig, die relevanten Spalten durch Vergleich mit einem Schwellenwert von nicht relevanten Spalten zu unterscheiden.

Mit Matlab kann automatisch eine gewisse Anzahl von exponentiell verteilten $\lambda$-Werten zwischen 0 und einem maximal möglichen Wert $\lambda_{max}$ erzeugt werden. Bei $\lambda = \lambda_{max}$ ist der Einfluss der $\ell$1-Norm so gross, dass die triviale Lösung zurückgegeben wird.

Im Rahmen des beschriebenen Verfahrens wird $\lambda$ wie folgt gewählt: Das Lasso-Verfahren wird mit 10 verschiedenen Werten von $\lambda$ durchgeführt (Schritt 201). Werte der resultierenden Parametermatrix, welche eine untere Schwelle $\xi$ übersteigen, werden zu 1 gesetzt, die übrigen zu 0 (Schritt 202). Anschliessend wird der cRLS-Algorithmus auf jede mögliche Lösung, die Lasso ergeben hat, angewandt (Schritt 203). Aus Effizienzgründen werden dabei nur diejenigen Spalten berücksichtigt, in welchen Lasso signifikante Koeffizienten ergeben hat.

Falls sich im Ergebnis des cRLS Koeffizienten mit Wert 1 finden (Entscheidung 204) und falls der Vorhersagefehler der Lösung besser ist als derjenige der bisher besten Lösung (Entscheidung 205), wird die bisher beste Lösung überschrieben (Schritt 206). Ansonsten wird eine weitere Iteration durchgeführt.

Die letztlich beste Lösung wird dann wie oben beschrieben analysiert und weiter verarbeitet.

Das vorstehend beschriebene Verfahren wurde für verschiedene Netztopologien getestet und hat sehr gute Ergebnisse bei der Bestimmung der Topologie von Stromversorgungsnetzen geliefert, namentlich auch beim Vorhandensein von Rauschen.

Zusammenfassend ist festzustellen, dass durch die Erfindung ein Verfahren und eine Einrichtung zur Bestimmung der Topologie eines Stromversorgungsnetzes bereitgestellt werden, welche ein genaues und robustes Ergebnis liefern.

## Patentansprüche

1. Verfahren zur Bestimmung der Topologie eines Stromversorgungsnetzes (1), umfassend Netzknoten (n1, n2, n3, n4, 2, 2.1, 2.2, 2.3, 2.4, 2.5, 6, 35, DC) und Netzverbindungen, wobei im Rahmen des Verfahrens folgende Schritte ausgeführt werden:

   a) Für eine Mehrzahl von Netzknoten (n1, n2, n3, n4, 2, 2.1, 2.2, 2.3, 2.4, 2.5, 6, 35, DC) Gewinnen einer Mehrzahl von zeitsynchronen Strom-Messwerten für Netzverbindungen, die mit dem jeweiligen Netzknoten (n1, n2, n3, n4, 2, 2.1, 2.2, 2.3, 2.4, 2.5, 6, 35, DC) verbunden sind, wobei die Strom-Messwerte komplexwertig sind und also einen Betrag und einen Phasenwinkel des Stroms umfassen;
   b) Evaluieren der Übereinstimmung von Messwerten für Netzverbindungen, die mit unterschiedlichen Netzknoten (n1, n2, n3, n4, 2, 2.1, 2.2, 2.3, 2.4, 2.5, 6, 35, DC) verbunden sind zur Gewinnung von Übereinstimmungswerten, wobei beim Evaluieren der Übereinstimmung der Phasenwinkel mit berücksichtigt wird;
   c) Rekonstruktion der Topologie anhand der Übereinstimmungswerte.

2. Verfahren nach Anspruch 1, **dadurch gekennzeichnet, dass** zum Evaluieren der Übereinstimmung eine Matrix ausgewertet wird, welche Strom-Messwerte als Linearkombinationen anderer Strom-Messwerte repräsentiert.

3. Verfahren nach Anspruch 2, **dadurch gekennzeichnet, dass** eine Regressionsanalyse der Matrix vorgenommen wird, in deren Rahmen Parameter der Matrix optimiert werden.

4. Verfahren nach Anspruch 3, **dadurch gekennzeichnet, dass** die Matrix zeilenweise bearbeitet wird.

5. Verfahren nach Anspruch 3 oder 4, **dadurch gekennzeichnet, dass** im Rahmen der Regressionsanalyse vor der Optimierung der Parameter die Matrix anhand von vorbekannten Informationen zu Netzknoten (n1, n2, n3, n4, 2, 2.1, 2.2, 2.3, 2.4, 2.5, 6, 35, DC) und Netzverbindungen vorverarbeitet wird.

6. Verfahren nach einem der Ansprüche 2 bis 5, **dadurch gekennzeichnet, dass** Kirchhoffsche Regeln auf die Matrix angewandt werden, um Netzknoten (n1, n2, n3, n4, 2, 2.1, 2.2, 2.3, 2.4, 2.5, 6, 35, DC) des Stromversorgungsnetzes zu berücksichtigen, zu welchen keine Strom-Messwerte vorliegen.

7. Verfahren nach einem der Ansprüche 3 bis 6, **dadurch gekennzeichnet, dass** Koeffizienten der Matrix durch einen Recursive-Least-Square-Algorithmus (RLS) bestimmt werden.

8. Verfahren nach einem der Ansprüche 3 bis 7, **dadurch gekennzeichnet, dass** ein Least Absolute Shrinkage and Selection Operator (LASSO) auf die Matrix angewandt wird.

**9.** Verfahren nach Anspruch 7 und 8, **dadurch gekennzeichnet, dass** der Operator mit verschiedenen Werten eines Abstimmparameters auf die Matrix angewandt wird, dass mindestens eine der resultierenden Lösungen derart modifiziert wird, dass die Koeffizienten jeweils 0 oder 1 annehmen und dass die mindestens eine modifizierte Lösung als Startpunkt für den Recursive-Least-Square-Algorithmus dient.

**10.** Verfahren nach Anspruch 9, **dadurch gekennzeichnet, dass** mehrere modifizierte Lösungen als Startpunkte für den Recursive-Least-Square-Algorithmus dienen und dass dasjenige Ergebnis des Recursive-Least-Square-Algorithmus ausgewählt wird, welches nicht-trivial ist und einen geringsten Vorhersagefehler aufweist.

**11.** Verfahren nach einem der Ansprüche 3 bis 10, **dadurch gekennzeichnet, dass** nach der Optimierung der Parameter der Matrix die erhaltenen Parameter analysiert werden und dass die Matrix anhand von Ergebnissen der Analyse in einen ausgewerteten Bereich und einen noch weiter zu verarbeitenden Bereich aufgeteilt wird, wonach für den noch weiter zu verarbeitenden Bereich eine erneute Optimierung der Parameter vorgenommen wird.

**12.** Einrichtung zur Bestimmung der Topologie eines Stromversorgungsnetzes (1), welches Netzknoten (n1, n2, n3, n4, 2, 2.1, 2.2, 2.3, 2.4, 2.5, 6, 35, DC) und Netzverbindungen aufweist, wobei die Einrichtung folgendes umfasst:

a) bei einer Mehrzahl von Netzknoten (n1, n2, n3, n4, 2, 2.1, 2.2, 2.3, 2.4, 2.5, 6, 35, DC) angeordnete Messeinheiten mit einem Zeitgeber, zur Gewinnung von zeitsynchronen Strom-Messwerten, die komplexwertig sind und also einen Betrag und einen Phasenwinkel des Stroms umfassen, für Netzverbindungen, die mit dem jeweiligen Netzknoten (n1, n2, n3, n4, 2, 2.1, 2.2, 2.3, 2.4, 2.5, 6, 35, DC) verbunden sind;
b) ein Auswertesystem zum Evaluieren der Übereinstimmung von Messwerten, wobei der Phasenwinkel mit berücksichtigt wird, für Netzverbindungen, die mit unterschiedlichen Netzknoten (n1, n2, n3, n4, 2, 2.1, 2.2, 2.3, 2.4, 2.5, 6, 35, DC) verbunden sind zur Gewinnung von Übereinstimmungswerten und zur Rekonstruktion der Topologie anhand der Übereinstimmungswerte;
c) Einrichtungen zur Übertragung der Strom-Messwerte zur Auswerteeinheit.

**Claims**

**1.** Method for determining the topology of a power supply network (1) comprising network nodes (n1, n2, n3, n4, 2, 2.1, 2.2, 2.3, 2.4, 2.5, 6, 35, DC) and network connections, wherein the following steps are carried out within the scope of the method:

a) obtaining, for a plurality of network nodes (n1, n2, n3, n4, 2, 2.1, 2.2, 2.3, 2.4, 2.5, 6, 35, DC), a plurality of time-synchronous current measurement values for network connections connected to the respective network node (n1, n2, n3, n4, 2, 2.1, 2.2, 2.3, 2.4, 2.5, 6, 35, DC), wherein the current measurement values are complex-valued and comprise a magnitude and a phase angle of the current,
b) evaluating the correspondence of measurement values for network connections that are connected to different network nodes (n1, n2, n3, n4, 2, 2.1, 2.2, 2.3, 2.4, 2.5, 6, 35, DC) for the purposes of obtaining correspondence values, wherein the phase angle is also taken into account when evaluating the correspondence;
c) reconstructing the topology on the basis of the correspondence values.

**2.** Method according to Claim 1, **characterized in that** a matrix is assessed for the purposes of evaluating the correspondence, said matrix representing current measurement values as linear combinations of other current measurement values.

**3.** Method according to Claim 2, **characterized in that** a regression analysis of the matrix is undertaken, within the scope of which parameters of the matrix are optimized.

**4.** Method according to Claim 3, **characterized in that** the matrix is processed row-by-row.

**5.** Method according to Claim 3 or 4, **characterized in that**, prior to the optimization of the parameters within the scope of the regression analysis, the matrix is pre-processed on the basis of information, known in advance, relating to network nodes (n1, n2, n3, n4, 2, 2.1, 2.2, 2.3, 2.4, 2.5, 6, 35, DC) and network connections.

**6.** Method according to any one of Claims 2 to 5, **characterized in that** Kirchhoff's laws are applied to the matrix in order to take account of network nodes (n1, n2, n3, n4, 2, 2.1, 2.2, 2.3, 2.4, 2.5, 6, 35, DC) of the power supply network for which no current measurement values are present.

7. Method according to any one of Claims 3 to 6, **characterized in that** the coefficients of the matrix are determined by a recursive least squares algorithm (RLS).

8. Method according to any one of Claims 3 to 7, **characterized in that** a least absolute shrinkage and selection operator (LASSO) is applied to the matrix.

9. Method according to Claims 7 and 8, **characterized in that** the operator is applied to the matrix with different values of a calibration parameter, **in that** at least one of the resultant solutions is modified in such a way that the coefficients each assume 0 or 1 and **in that** the at least one modified solution serves as a starting point for the recursive least squares algorithm.

10. Method according to Claim 9, **characterized in that** a plurality of modified solutions serve as starting points for the recursive least squares algorithm and **in that** the result of the recursive least squares algorithm that is non-trivial and that has a smallest prediction error is selected.

11. Method according to any one of Claims 3 to 10, **characterized in that** the obtained parameters are analysed after optimizing the parameters of the matrix and **in that** the matrix is split into an assessed region and into a region still to be processed further on the basis of the results of the analysis, following which a renewed optimization of the parameters is undertaken for the region still to be processed further.

12. Device for determining the topology of a power supply network (1) having network nodes (n1, n2, n3, n4, 2, 2.1, 2.2, 2.3, 2.4, 2.5, 6, 35, DC) and network connections, wherein the device comprises the following:

a) measuring units with a clock, arranged at a plurality of network nodes (n1, n2, n3, n4, 2, 2.1, 2.2, 2.3, 2.4, 2.5, 6, 35, DC), for obtaining time-synchronous current measurement values, which are complex-valued and therefore comprise a magnitude and a phase angle of the current, for network connections that are connected to the respective network node (n1, n2, n3, n4, 2, 2.1, 2.2, 2.3, 2.4, 2.5, 6, 35, DC);
b) an assessment system for evaluating the correspondence of measurement values, wherein the phase angle is also taken into account, for network connections that are connected to different network nodes (n1, n2, n3, n4, 2, 2.1, 2.2, 2.3, 2.4, 2.5, 6, 35, DC) for the purposes of obtaining correspondence values and for the purposes of reconstructing the topology on the basis of the correspondence values;
c) devices for transmitting the current measurement values to the evaluation unit.

**Revendications**

1. Procédé pour déterminer la topologie d'un réseau de distribution d'électricité (1), comprenant des noeuds de réseau (n1, n2, n3, n4, 2, 2.1, 2.2, 2.3, 2.4, 2.5, 6, 35, DC) et des connexions de réseau, les étapes suivantes étant exécutées dans le cadre du procédé :

a) pour une pluralité de noeuds de réseau (n1, n2, n3, n4, 2, 2.1, 2.2, 2.3, 2.4, 2.5, 6, 35, DC), obtention d'une pluralité de valeurs de mesure du courant synchronisées dans le temps pour les connexions de réseau qui sont reliées aux noeuds de réseau (n1, n2, n3, n4, 2, 2.1, 2.2, 2.3, 2.4, 2.5, 6, 35, DC) respectifs, les valeurs de mesure du courant étant des valeurs complexes et comprenant de ce fait un montant et un angle de phase du courant ;
b) évaluation de la concordance des valeurs mesurées pour les connexions de réseau qui sont reliées à différents noeuds de réseau (n1, n2, N3, N4, 2, 2.1, 2.2, 2.3, 2.4, 2.5, 6, 35, DC) en vue d'obtenir des valeurs de concordance, la concordance de l'angle de phase étant également prise en compte lors de l'évaluation ;
c) reconstruction de la topologie à l'aide des valeurs de concordance.

2. Procédé selon la revendication 1, **caractérisé en ce que** pour l'évaluation de la concordance, une matrice est interprétée, laquelle représente des valeurs mesurées du courant sous la forme de combinaisons linéaires d'autres valeurs mesurées du courant.

3. Procédé selon la revendication 2, **caractérisé en ce qu'**une analyse de régression de la matrice est effectuée, dans le cadre de laquelle les paramètres de la matrice sont optimisés.

**4.** Procédé selon la revendication 3, **caractérisé en ce que** la matrice est traitée ligne par ligne.

**5.** Procédé selon la revendication 3 ou 4, **caractérisé en ce que** dans le cadre de l'analyse de régression, la matrice est prétraitée avant l'optimisation des paramètres à l'aide d'informations préalablement connues à propos des noeuds de réseau (n1, n2, N3, N4, 2, 2.1, 2.2, 2.3, 2.4, 2.5, 6, 35, DC) et des connexions de réseau.

**6.** Procédé selon l'une des revendications 2 à 5, **caractérisé en ce que** les règles de Kirchhoff sont appliquées sur la matrice afin de tenir compte des noeuds de réseau (n1, n2, N3, N4, 2, 2.1, 2.2, 2.3, 2.4, 2.5, 6, 35, DC) du réseau de distribution d'électricité pour lesquels il n'existe pas de valeurs de mesure du courant.

**7.** Procédé selon l'une des revendications 3 à 6, **caractérisé en ce que** les coefficients de la matrice sont déterminés par un algorithme des moindres carrés récursifs (RLS).

**8.** Procédé selon l'une des revendications 3 à 7, **caractérisé en ce qu'**un opérateur de moindre contraction absolue et sélection (LASSO) est appliqué sur la matrice.

**9.** Procédé selon les revendications 7 et 8, **caractérisé en ce que** l'opérateur est appliqué sur la matrice avec différentes valeurs d'un paramètre d'accord, **en ce qu'**au moins l'une des solutions résultantes est modifiée de telle sorte que les coefficients prennent respectivement la valeur 0 ou 1 et **en ce que** l'au moins une solution modifiée sert de point de départ pour l'algorithme des moindres carrés récursifs.

**10.** Procédé selon la revendication 9, **caractérisé en ce que** plusieurs solutions modifiées servent de point de départ pour l'algorithme des moindres carrés récursifs et **en ce que** le résultat choisi de l'algorithme des moindres carrés récursifs est celui qui n'est pas trivial et qui présente une plus petite erreur de prévision.

**11.** Procédé selon l'une des revendications 3 à 10, **caractérisé en ce qu'**après l'optimisation des paramètres de la matrice, les paramètres obtenus sont analysés et **en ce que** la matrice est divisée à l'aide des résultats de l'analyse en une zone interprétée et une zone nécessitant encore un traitement, après quoi une nouvelle optimisation des paramètres est effectuée pour la zone nécessitant encore un traitement.

**12.** Dispositif pour déterminer la topologie d'un réseau de distribution d'électricité (1), lequel possède des noeuds de réseau (n1, n2, N3, N4, 2, 2.1, 2.2, 2.3, 2.4, 2.5, 6, 35, DC) et des connexions de réseau, le dispositif comprenant ce qui suit :

a) des unités de mesure pourvues d'une minuterie disposées au niveau d'une pluralité de noeuds de réseau (n1, n2, N3, N4, 2, 2.1, 2.2, 2.3, 2.4, 2.5, 6, 35, DC), destinées à obtenir des valeurs de mesure du courant synchronisées dans le temps, qui sont des valeurs complexes et comprennent de ce fait un montant et un angle de phase du courant, pour des connexions de réseau qui sont reliées aux noeuds de réseau (n1, n2, N3, N4, 2, 2.1, 2.2, 2.3, 2.4, 2.5, 6, 35, DC) respectifs ;

b) un système d'interprétation destiné à évaluer la concordance des valeurs mesurées, l'angle de phase étant également pris en compte, pour les connexions de réseau qui sont reliées à différents noeuds de réseau (n1, n2, N3, N4, 2, 2.1, 2.2, 2.3, 2.4, 2.5, 6, 35, DC) en vue d'obtenir des valeurs de concordance et en vue de reconstruire la topologie à l'aide des valeurs de concordance ;

c) des dispositifs pour la transmission des valeurs de mesure du courant vers l'unité d'interprétation.

Fig. 1A

Fig. 1B

Fig. 2

**Fig. 3**

16        6        19

**Fig. 4**

1

5    2    13

3

**Fig. 5**

**Fig. 6**

**Fig. 7**

Fig. 8

Fig. 9A

Fig. 9B

Fig. 9C

330

331

332

333 → 334

335

**Fig. 9D**

340

341

342 → 344

343

**Fig. 9E**

350

351

352

353

354

**Fig. 9F**

400

## Fig. 10A

410

## Fig. 10B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 511910 A1

**In der Beschreibung aufgeführte Nicht-Patentliteratur**

- Topology Identification in Smart Grid with Limited Measurements via Convex Optimization. **L. ZHAO et al.** Innovative Smart Grid Technologies - Asia (ISGT Asia). IEEE, 2014
- Topology Identification in Distribution Network with Limited Measurements. **Y. SHARON.** Innovative Smart Grid Technologies (ISGT). IEEE, 2012
- **S. BOLOGNANI et al.** Identification of power distribution network topology via voltage correlation analysis. *Proc. IEEE Conf. on Decision and Control,* 2013
- **P. S. DINIZ.** Adaptive Filtering. Springer, 1997
- **R. TIBSHIRANI.** Regression Shrinkage and Selection via the Lasso. *Journal of the Royal Statistical Society,* 1996, vol. 58 (1), 267-288
- **B. P. S. DINIZ.** Adaptive Filtering. Springer, 1997